# FASCICULE DE BREVET EUROPEEN

(11) **EP 3 835 701 B1**
(45) Date de publication et mention de la délivrance du brevet: **16.04.2025**
(21) Numéro de dépôt: 20212535.7
(22) Date de dépôt: 08.12.2020
(51) Int. Cl.: F28D 7/00, F02B 29/04, F02M 26/02, F02M 26/28, F02M 26/30, F02M 26/32, F28D 7/16, F28D 21/00

(54) **ÉCHANGEUR DOUBLE À FLUX DE GAZ ORTHOGONAUX**
DOPPELWÄRMETAUSCHER MIT ORTHOGONALEM GASSTROM
DOUBLE HEAT EXCHANGER WITH ORTHOGONAL GAS FLOW

(30) Priorité: 12.12.2019 FR 1914274
(43) Date de publication de la demande: 16.06.2021
(73) Titulaire: NEW H POWERTRAIN HOLDING, S.L.U., 47008 Valladolid (ES)
(72) Inventeur: LAVABRE, Guilhem, 92420 vaucresson (FR); SERAFINSKI, Michal, 92210 Saint-CLoud (FR); VENEZIANI, Thomas, 75015 PARIS (FR)
(74) Mandataire: Renault Group

(56) Documents cités:
- DE-A1- 102007 009 354
- DE-A1- 102011 013 029
- DE-A1- 102014 110 046
- FR-A1- 2 917 124
- FR-A1- 3 049 312

## Description

### Domaine technique de l'invention

La présente invention concerne un système de refroidissement de gaz à hautes température.

La présente invention concerne plus particulièrement le domaine des systèmes de refroidissement pour moteurs à combustion interne, notamment le refroidissement des gaz d'admission de moteur thermique de véhicule automobile.

Elle concerne plus particulièrement un système de refroidissement pour moteur à combustion interne, ledit système de refroidissement comprenant un échangeur thermique connecté à deux circuits de circulation de gaz à haute température, notamment d'air compressé et de gaz brulés, et dans lequel circule un fluide caloporteur.

### Etat de la technique

De manière connue, un véhicule automobile équipé d'un moteur thermique comprend un circuit d'admission d'air pour amener de l'air frais capté généralement au niveau de la face avant du véhicule puis filtré grâce à un filtre à air, vers le moteur thermique.

De manière connue, un moteur thermique peut comprendre un système de suralimentation afin d'accroitre les performances dudit moteur. Le système de suralimentation comprend un étage de compression d'air avant son admission dans le moteur pour être mélangé avec du carburant. Cet étage de compression peut être associé avec un étage de turbine pour former ensemble un turbocompresseur ou être un module de compression électrique.

Pour améliorer le rendement dudit moteur thermique, l'air frais est compressé au passage de l'étage de compression, ce qui entraine une augmentation de sa température, ce qui est susceptible de réduire l'efficacité du moteur.

Il est donc connu de faire passer l'air compressé après l'étage de compression et en amont du moteur dans un étage de refroidissement appelé couramment « precooler » qui est formé par un échangeur air-eau. Dans ledit échangeur, l'air circule en contact par exemple dans des tubes logés dans une chambre dans laquelle circule de l'eau de refroidissement provenant d'un circuit de refroidissement du moteur. Le circuit de refroidissement peut passer par exemple au travers du moteur pour refroidir également des parties portées à haute température du moteur comme le carter-cylindres et la culasse, l'eau de refroidissement se chargeant alors de calories, et puis par un radiateur pour permettre une dépose desdites calories et leur évacuation. La circulation de l'eau de refroidissement est effectuée grâce à une pompe à eau entrainée par le moteur thermique ou par une pompe à eau électrique.

Pour réduire des rejets de polluants générés par la combustion, des gaz brulés peuvent être ramenés depuis l'échappement c'est-à-dire en aval de la combustion dans les cylindres, vers les conduits d'admission du moteur. Les gaz sont nommés gaz recirculés. On a différents types de gaz brulés recirculés :
- des gaz recirculés haute pression prélevés depuis le circuit d'échappement en amont selon le sens d'écoulement des gaz de dispositifs de dépollution comme par exemple un catalyseur ou piège à oxyde d'azote (Nox). De manière générale, les gaz brulés recirculés haute pression sont prélevés directement depuis un collecteur d'échappement fixé à une face d'échappement de la culasse, du côté latéral opposé à la face d'admission et sont envoyés ensuite vers les conduits d'admission ou dans le répartiteur d'admission.
- des gaz brulés recirculés basse pression prélevés dans le circuit d'échappement et de manière connue après un dispositif de dépollution. Les gaz brulés recirculés basse pression sont donc prélevés en aval d'un dispositif d'échappement et renvoyés vers l'admission du moteur
- des gaz de blow-by ou de vapeurs d'huile prélevés depuis un décanteur fixé généralement à la culasse.

De manière connue, les gaz recirculés sont refroidis avant d'être mélangés avec l'air frais ou compressé.

L'invention concerne le refroidissement de l'air compressé et le refroidissement des gaz recirculés à l'admission thermique.

Le document US 2011/0139133 décrit un moteur à combustion interne qui est équipé d'un système de refroidissement particulier. Lors d'un démarrage à froid du moteur, ce système de « refroidissement » est utilisé pour réchauffer le moteur en utilisant la chaleur dégagée par les gaz brûlés.

Pour cela, le système de refroidissement comporte un échangeur de chaleur qui fait circuler un fluide caloporteur autour du circuit de gaz recirculés, ce qui permet au fluide caloporteur de récupérer une partie de la chaleur des gaz brûlés. Le fluide caloporteur circule ensuite autour des cylindres et leur cède une partie de la chaleur récupérée.

Le document FR3079880-A1 propose un carter apte à loger un échangeur de chaleur pour le refroidissement des gaz recirculés haute pression et un échangeur de chaleur pour le refroidissement de l'air compressé en amont de conduits d'admission du moteur thermique.

DE-A-102011013029 divulgue un système de refroidissement selon le préambule de la revendication 1.

Le document propose que les entrées de gaz recirculés et d'air mélangé sont toutes deux tournées vers la face échappement du moteur, ce qui permet d'obtenir un dispositif de refroidissement compact mais moins efficace. De plus, les températures des gaz étant très élevées, la température du carter peut être sensiblement augmentée à certains endroits notamment à proximité des entrées de gaz, pouvant générer des dilatations importantes. L'objet de l'invention est un dispositif de refroidissement de circuits de gaz et d'air compressé présentant de hautes températures en amont de l'admission du moteur qui pallie les problèmes cités.

### Objet de l'invention

Pour cela, la présente invention propose un système de refroidissement de gaz et d'air compressé dont les températures sont différentes, comportant un échangeur de chaleur double-flux traversé par les gaz selon un premier axe et l'air compressé selon un second axe,

Caractérisé en ce que l'échangeur comprend une chambre de refroidissement pour les gaz accolée et communiquant avec une chambre de refroidissement pour l'air compressé dans lesquelles l'axe du flux de gaz est sensiblement orthogonal à l'axe du flux d'air compressé

De manière avantageuse, les axes des de gaz et d'air compressé dans l'échangeur du système de refroidissement sont sensiblement orthogonaux, ce qui permet d'une part de ne pas cumuler aux mêmes endroits du carter de l'échangeur, notamment à proximité des entrées de gaz et d'air compressé, des quantités de chaleur importantes et d'autre part d'autoriser des dilatations de l'échangeur, notamment du carter de l'échangeur, dans des directions différentes.

Selon d'autres caractéristiques de l'invention :
- l'échangeur de chaleur comprend un circuit de liquide de refroidissement qui traverse consécutivement les chambres de refroidissement.

De manière avantageuse, le circuit de refroidissement est apte au refroidissement consécutif de l'air et des gaz en passant dans une chambre puis dans la seconde chambre, ce qui permet de d'obtenir un refroidissement gradué des gaz et de l'air compressé.
- Le circuit de liquide de refroidissement présente une branche de circulation dans chacune des deux chambres d'axes parallèles.

De manière avantageuse, le circuit de liquide de refroidissement présente dans chacune des chambres une branche de circulation de liquide de refroidissement sensiblement selon un axe, les deux étant parallèles, ce qui présentent une longueur de parcours de liquide de refroidissement sensiblement identique dans les deux chambres et donc une efficacité de refroidissement sensiblement égale dans les deux chambres.
- L'entrée et la sortie du circuit de liquide sont disposées dans des chambres différentes.

De manière avantageuse, l'entrée et la sortie du carter, du circuit de liquide sont disposées dans des chambres différentes pour éviter un réchauffement des gaz ou de l'air en fin de circuit de liquide.
- l'entrée du circuit de liquide débouche dans la chambre de refroidissement d'air compressé.

De manière avantageuse, le liquide de refroidissement passe dans le carter en premier par une entrée qui débouche dans la chambre de refroidissement d'air compressé pour refroidir de façon maximale l'air compressé pour une meilleure efficacité du moteur, et pour éviter une différence de température trop importante entre le liquide de refroidissement et les gaz recirculés, qui est susceptible de produire des condensats ou agrégats en entrée du carter.
- le circuit de liquide de refroidissement suit un parcours en profil de U.

De manière avantageuse, le circuit de liquide de refroidissement présente un chemin avec un profil en forme de U pour bien diriger le liquide et réduire les pertes de charge.
- l'axe de circulation de liquide est orthogonal à l'axe de circulation de l'air compressé.

De manière avantageuse, l'axe de circulation du fluide de refroidissement est orthogonal à l'axe de circulation d'air compressé pour obtenir une grande efficacité d'échange de chaleur.
- l'axe de circulation du liquide est parallèle à l'axe de circulation des gaz recirculés.

De manière avantageuse, l'axe de circulation de fluide de refroidissement est parallèle à l'axe de circulation de gaz recirculés pour éviter des phénomènes d'ébullition du liquide.
- Le circuit de liquide de refroidissement traverse une paroi de séparation des deux chambres par une ouverture.

De manière avantageuse, le carter comprend une paroi apte à séparer les deux chambres de refroidissement. Le circuit de refroidissement traverse ladite paroi par une ouverture percée dans cette paroi. Le liquide peut ainsi passer de la première chambre dans la seconde chambre.
- l'ouverture est agencée sensiblement diamétralement opposée à l'entrée de fluide dans l'échangeur.

De manière avantageuse, l'ouverture percée dans la paroi de séparation est agencée de façon sensiblement diamétralement opposée à l'entrée de liquide de refroidissement pour permettre une longueur maximale de la zone d'échange de chaleur.
- L'ouverture percée dans la paroi de séparation est agencée de façon sensiblement diamétralement opposée à la sortie de liquide de refroidissement pour permettre une longueur maximale de la zone d'échange de chaleur.

De manière avantageuse, l'ouverture percée dans la paroi de séparation est agencée de façon sensiblement diamétralement opposée à la sortie de liquide de refroidissement pour permettre une longueur maximale de la zone d'échange de chaleur.
- les gaz recirculés et l'air compressé traversent l'échangeur par des conduits tubulaires de section oblongue.

De manière avantageuse, les gaz recirculés et l'air compressé traversent le carter et notamment l'échangeur par des conduits de refroidissement qui s'étendent depuis une paroi d'entrée vers une paroi de sortie du carter, la section transversale de chaque conduit de refroidissement est oblongue pour présenter une surface d'échange importante.

Les conduits de refroidissement sont plongés dans le liquide de refroidissement.
- l'invention concerne également un moteur thermique comprenant un échangeur de chaleur avec deux flux de gaz selon les caractéristiques présentées.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'un corps d'échangeur de chaleur à double flux de gaz.
[Fig. 2] est une vue schématique de l'échangeur de chaleur.
[Fig. 3] est une vue schématique de coupe longitudinale de l'échangeur.

### Description détaillée des figures

Dans la description qui va suivre, des chiffres de référence identiques désignent des pièces identiques ou ayant des fonctions similaires.

Pour faciliter la compréhension, la description qui suit concerne le refroidissement de gaz brulés recirculés et d'air compressé en amont de conduits d'admission d'un moteur thermique ici de véhicule automobile.

Un moteur thermique ou à combustion interne (non représenté) de véhicule automobile comprend un circuit d'admission d'air dit frais capté généralement depuis la face avant du véhicule apte à acheminer cet air frais vers le moteur, notamment vers un répartiteur d'admission apte à distribuer l'air d'admission vers des conduits d'admission creusés dans une culasse et connectés à des chambres de combustion.

Pour améliorer le rendement du moteur, il est connu d'augmenter la densité de l'air. L'air frais passe par un étage de compression qui peut être l'étage de compresseur d'un turbocompresseur du moteur. Il est également connu de disposer d'un compresseur électrique.

En sortie de l'étage de compression, la température de l'air a également augmenté, de l'ordre de 200°C, ce qui réduit l'efficacité du moteur. L'a ir en aval de l'étape de compression selon le sens de circulation de l'air doit être refroidi avant son admission dans le moteur.

L'air doit alors passer par une étape de refroidissement qui est formée généralement par un échangeur de chaleur de type gaz-liquide de refroidissement. Ledit échangeur est connu sous le nom anglais de « Precooler » pour refroidisseur amont. Le liquide de refroidissement est à base d'eau qui circule dans un circuit de refroidissement du moteur grâce à une pompe à liquide de refroidissement.

Parallèlement, pour réduire les émissions de polluants, il est connu de ramener des gaz brulés vers l'admission du moteur. Lesdits gaz brulés sont issus de la combustion dans la chambre de combustion du moteur. Ils sont captés dans un circuit d'échappement et acheminés vers l'admission du moteur notamment vers les conduits d'admission du moteur par un circuit de recirculation des gaz brulés.

Les gaz ici sont des gaz recirculés haute pression captés au niveau d'un dispositif de collecte des gaz d'échappement. Lesdits gaz sont connus sous le nom de gaz « EGR » en anglais. On nommera par la suite lesdits gaz EGR par gaz recirculés.

Les gaz recirculés sont à haute température, de l'ordre de 700°C. Ils nécessitent d'être refroidis avant l'admission dans le moteur. Le circuit des gaz recirculés passe également par un échangeur de chaleur de type gaz/liquide de refroidissement.

Pour réduire l'encombrement de l'ensemble comprenant le moteur avec les dispositifs de fonctionnement du moteur parmi lesquels les échangeurs de chaleur, on peut assembler l'échangeur de chaleur pour l'air frais compressé avec l'échangeur de chaleur pour les gaz recirculés. On obtient un système de refroidissement 100 de gaz à l'admission du moteur comprenant un échangeur double flux 10. Les entrées d'air compressé et de gaz recirculés sont par exemple agencées sur une paroi du carter de l'échangeur double flux tournée vers la face d'échappement du moteur tandis que les sorties sont tournées vers la face d'admission du moteur.

Cependant, les températures respectives de l'air compressé et des gaz recirculés sont très différentes ce qui entraine des problèmes de dilatation différentielles entre les deux échangeurs assemblés et plus clairement des parois du carter de l'échangeur double-flux. En effet, la différence importante de température entre les gaz recirculés et l'air d'admission peut entrainer de fortes contraintes thermomécaniques qui mettent en danger la tenue de l'échangeur et notamment du carter de l'échangeur. Par la suite, les parois de l'échangeur sont les parois du carter de l'échangeur.

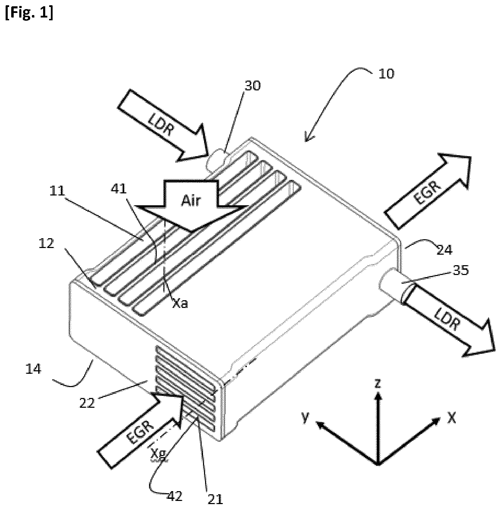

Selon la figure 1, l'échangeur double flux 10 comporte une entrée pour l'air compressé 11 agencée sur une première paroi d'entrée 12 de gaz et une entrée pour les gaz recirculés 21 agencée sur une deuxième paroi d'entrée 22 pour l'entrée des gaz recirculés. Selon l'invention, la première paroi d'entrée 12 est distincte de la deuxième paroi d'entrée 22 et plus précisément la première paroi d'entrée est voisine et orthogonale à la deuxième paroi d'entrée 22.

Le flux d'air compressé traverse l'échangeur selon un axe rectiligne Xa entre la première paroi d'entrée 12 et la première paroi de sortie 14 d'air de l'échangeur air-liquide de refroidissement. Les premières parois d'entrée 12 et de sortie 14 d'air sont symétriques par rapport à un plan médian orthogonal à l'axe Xa.

De même, Le flux de gaz recirculés traverse l'échangeur selon un axe rectiligne Xg entre la deuxième paroi d'entrée 22 et la deuxième paroi de sortie 24 de l'échangeur gaz recirculés-liquide de refroidissement. Les deuxièmes parois d'entrée 22 et de sortie 24 sont symétriques par rapport à un plan médian orthogonal à l'axe Xg.

Selon l'invention et de manière préférentielle, les axes d'écoulement d'air compressé Xa et de gaz recirculés Xg sont sensiblement orthogonaux pour présenter un moindre encombrement avec une simplicité de d'assemblage avec d'autres composants du moteur. Toutefois, l'axe d'écoulement d'air compressé peut être en biais par rapport à l'axe d'écoulement des recirculés pour faciliter la fixation de l'échangeur avec le moteur et réduire l'encombrement de l'ensemble.

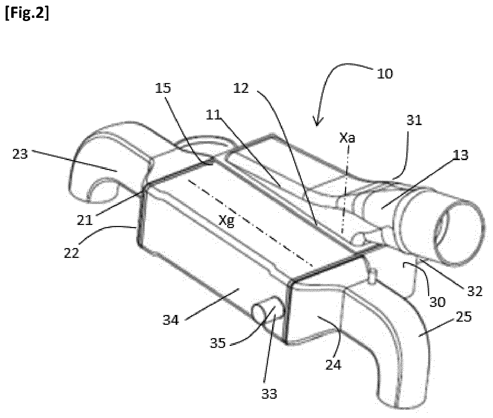

Comme représenté par la figure 2, le circuit d'admission d'air est raccordé par une corne d'entrée 13 fixée à la première paroi d'entrée 12 du carter et par une corne de sortie 15 à la première paroi de sortie 14. La première paroi de sortie 14 est parallèle et en vis-à-vis avec la première paroi d'entrée 12.

La section de passage aval selon le sens d'écoulement de l'air, de la corne 13 fixée est sensiblement égale à la section de passage de l'échangeur de chaleur air-eau. En effet, la section de passage aval de la corne d'entrée 13 est la plus importante possible. Elle est sensiblement égale voire légèrement supérieure à la section de passage de l'échangeur air compressé-liquide de refroidissement.

On entend par section de passage de l'échangeur la section transversale de la chambre d'échangeur, orthogonale à l'axe de la direction du flux Xa d'air compressé.

La corne de sortie 15 est sensiblement identique à la corne d'entrée. La section de passage amont de la corne de sortie 15 est donc égale à la section de passage de l'échangeur de chaleur air compressé-liquide de refroidissement.

De manière préférentielle, le circuit de recirculation des gaz brulés est également raccordé par une deuxième corne d'entrée 23 fixée à la deuxième paroi d'entrée 22 de l'échangeur et par une corne de sortie 25 à une deuxième paroi de sortie 24 en vis-à-vis de la deuxième paroi d'entrée 22. La deuxième paroi d'entrée 22 est parallèle à la deuxième paroi de sortie 24. Les deuxièmes parois d'entrée 22 et de sortie 24 sont donc orthogonales aux premières parois d'entrée 12 et de sortie 14.

La section de passage aval de la deuxième corne d'entrée 23 fixée à l'échangeur est sensiblement égale à la section de passage de l'échangeur de chaleur gaz recirculés-liquide de refroidissement. La section de passage aval de la deuxième corne d'entrée 23 est la plus importante possible. Elle est sensiblement égale à la section de passage de l'échangeur gaz recirculés-liquide de refroidissement, voire légèrement supérieure. On entend par section de passage de l'échangeur la section transversale par rapport au sens d'écoulement des gaz ou de l'air, de la chambre d'échangeur de chaleur ici la chambre d'échange de chaleur entre les gaz recirculés et le liquide de refroidissement, orthogonale à l'axe Xg de la direction du flux de gaz recirculés.

Le circuit de liquide de refroidissement est connecté à l'échangeur par des embouts d'entrée 32 et de sortie 33 de liquide de refroidissement qui s'étendent respectivement depuis une paroi d'entrée d'eau 31 et une paroi de sortie d'eau 34 de l'échangeur. L'entrée de liquide 30 et la sortie de liquide 35 définies par lesdits embouts sont agencées à une extrémité des parois d'entrée 31 et de sortie 34 pour obtenir une longueur de parcours du liquide de refroidissement la plus importante possible.

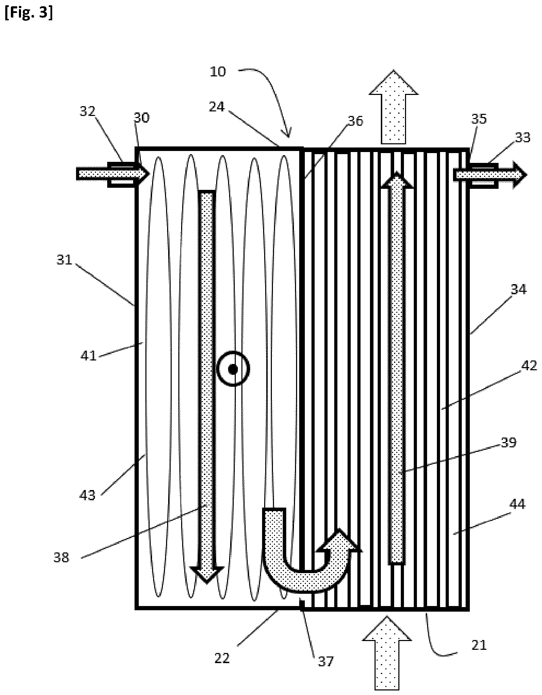

De manière préférentielle, la paroi d'entrée d'eau 31 est distincte de la paroi de sortie d'eau 34. En effet, le parcours de l'eau dans le l'échangeur ne revient pas en arrière au risque d'altérer l'efficacité de l'échangeur, comme représenté par la figure 3.

Le circuit de liquide de refroidissement suit un parcours dans l'échangeur 10 selon deux branches de refroidissement parallèles 38,39 et sensiblement symétriques par rapport à une paroi de séparation médiane plane 36 parallèle aux parois d'entrée 31 et de sortie 34 d'eau. L'échangeur 10 comprend ainsi deux chambres d'eau 41 et 42 pour refroidir individuellement l'air compressé et les gaz recirculés.

Dans les deux chambres d'eau 41,42 sont logés des conduits tubulaires 43,44 de section transversale oblongue pour conduire respectivement l'air compressé et les gaz recirculés entre les parois d'entrée 12,22 et de sortie 14,24.

Les tubes guidant l'air et les gaz recirculés sont placés perpendiculairement. Ainsi, leurs dilatations respectives sous l'effet de la chaleur ne s'effectuent pas dans la même direction. Le carter peut donc se déformer de façon indépendante pour s'adapter à la variation de longueur des tubes dans chaque direction.

De manière préférentielle, les volumes des deux chambres 41,42 de l'échangeur sont sensiblement égales.

De manière préférentielle, les deux branches 38,39 de refroidissement et de circulation du liquide de refroidissement à l'intérieur l'échangeur sont séparées par la paroi médiane de séparation 36.

La paroi de séparation 36 comprend une ouverture 37 permettant la communication entre les deux chambres 41,42. Ladite ouverture 37 est percée dans la paroi de séparation de façon diamétralement opposée à l'entrée de liquide 30 pour permettre une longueur d'échange optimale, la plus longue possible. Ladite ouverture 37 est également agencée sensiblement diamétralement opposée à la sortie de fluide 35.

De manière préférentielle, l'entrée de liquide de refroidissement 30 débouche dans la première chambre 41 de refroidissement dédiée aux échanges de chaleur avec l'air compressé. Selon les figures 2 et 3, l'axe des conduits tubulaires d'air 43 est orthogonal à la direction de circulation de l'eau dans la première chambre 41. Les axes de circulation de l'air compressé et du liquide de refroidissement sont orthogonaux ou « cross-flow en anglais » pour améliorer l'efficacité des échanges thermiques.

Le liquide de refroidissement passe en premier dans la chambre de refroidissement 41 de l'air compressé, se charge en chaleur et sa température augmente avant de rejoindre la seconde chambre de refroidissement 42 pour refroidir les gaz recirculés.

Les échanges de chaleur du liquide avec l'air compressé et les gaz recirculés s'effectuent en série pour favoriser le refroidissement de l'air compressé à l'admission.

De plus, la différence de température entre le liquide de refroidissement et les gaz recirculés est moindre et peut éviter la formation de condensats dans les tubes.

Le parcours du liquide de refroidissement dans les chambres 41,42 est dirigé selon un axe sensiblement parallèle à la paroi médiane de séparation 36 dans un premier sens depuis l'entrée d'eau 30 vers l'ouverture 37, puis selon un second sens opposé depuis l'ouverture 37 vers la sortie d'eau 35 formant un parcours avec un profil de U à l'intérieur de l'échangeur 10 comme représenté en figure 3.

L'axe des conduits tubulaires de gaz recirculés est parallèle à la paroi médiane de séparation et à l'axe de circulation d'eau dans la seconde chambre 42. L'axe de circulation du liquide de refroidissement sensiblement parallèle à l'axe Xg des conduits tubulaires de circulation des gaz recirculés permet d'éviter des phénomènes d'ébullition de l'eau.

L'objectif est atteint :
L'échangeur à double flux 10 pour refroidir l'air compressé et les gaz recirculés est compact de par l'assemblage des deux échangeurs, en assurant les contraintes thermomécaniques liées aux différences de températures entre les deux flux de d'air et de gaz, par un assemblage astucieux présentant des axes de circulation des flux orthogonaux. Ainsi, les dilatations respectives des parois de l'échangeur sous l'effet de la chaleur ne s'effectuent pas dans la même direction. Le carter de l'échangeur peut donc se déformer de façon indépendante pour s'adapter à la variation de longueur des conduits tubulaires d'air compressé 43 et de gaz recirculés 44 dans chacune des deux directions.

Comme il va de soi, l'invention ne se limite pas aux seules formes d'exécution de cette prise, décrites ci-dessus à titre d'exemples, elle en embrasse au contraire toutes les variantes.

Par exemple, le flux de circulation des gaz recirculés peut être dans le même sens que celui du liquide de refroidissement ou en sens contraire.

L'échangeur de chaleur selon l'invention peut concerner un autre domaine que l'automobile, pour refroidir deux flux de gaz à des températures différentes.

## Revendications

1. Système de refroidissement (100) de gaz et d'air comportant un échangeur de chaleur double-flux (10) traversé par les gaz selon un premier axe et l'air compressé selon un second axe, et comprenant une chambre de refroidissement pour les gaz (42) accolée et communiquant avec une chambre de refroidissement pour l'air compressé (41) dans lesquelles l'axe du flux de gaz (Xg) est sensiblement orthogonal à l'axe du flux d'air compressé (Xa) et un circuit de liquide de refroidissement qui traverse consécutivement les deux chambres de refroidissement (41, 42), caractérisé en ce les deux chambres (41,42) sont accolées et séparées l'une de l'autre par une paroi médiane de séparation (36) comprenant une ouverture (37) permettant la communication de liquide entre les deux chambres (41,42) et en ce que le circuit de liquide de refroidissement à l'intérieur de l'échangeur (10) présente deux branches de circulation (38,39) parallèles et suit un parcours en profil de U à l'intérieur de l'échangeur depuis une entrée (30) à une sortie (35) disposées dans des chambres différentes (41,42).

2. Système de refroidissement (100) selon la revendication 2, **caractérisé en ce que** le circuit de liquide de refroidissement comprend une entrée (30) et une sortie (35) dans l'échangeur, disposées dans des chambres différentes (41,42).

3. Système de refroidissement (100) selon la revendication 1 ou 2, **caractérisé en ce que** l'entrée de liquide (30) débouche dans la chambre de refroidissement d'air compressé (41).

4. Système de refroidissement (100) selon l'une quelconque des revendications 1 à 3, **caractérisé en ce que** l'axe de circulation de liquide est orthogonal à l'axe de circulation de l'air compressé.

5. Système de refroidissement (100) selon l'une quelconque des revendications 1 à 4, **caractérisé en ce que** l'axe de circulation du liquide est parallèle à l'axe de circulation des gaz recirculés.

6. Système de refroidissement (100) selon l'une des revendications 1 à 5, **caractérisé en ce que** l'ouverture (37) est agencée sensiblement diamétralement opposée à l'entrée de fluide (30) dans l'échangeur.

7. Système de refroidissement (100) selon l'une des revendications 1 à 6, **caractérisé en ce que** l'ouverture (37) percée dans la paroi de séparation (36) est agencée de façon sensiblement diamétralement opposée à la sortie de liquide (35) de refroidissement pour permettre une longueur maximale de la zone d'échange de chaleur.

8. Système de refroidissement (100) selon l'une quelconque des revendications 1 à 7, **caractérisé en ce que** les gaz recirculés et l'air compressé traversent l'échangeur par des conduits tubulaires (43,44) de section oblongue.

9. Moteur thermique comprenant un circuit d'air d'admission et un circuit de gaz recirculés qui passent par un système de refroidissement selon l'une quelconque des revendications de 1 à 8.

10. Véhicule automobile comprenant un moteur thermique selon la revendication 9.

## Patentansprüche

1. Kühlsystem (100) für Gas und Luft, das einen Doppelstromwärmetauscher (10) aufweist, der durch die Gase entlang einer ersten Achse und die Druckluft entlang einer zweiten Achse passiert wird, und umfassend eine Kühlkammer für die Gase (42), die an eine Kühlkammer für die Druckluft (41) angefügt ist und mit dieser in Verbindung steht, wobei die Achse des Gasstroms (Xg) im Wesentlichen orthogonal zu der Achse des Druckluftstroms (Xa) ist, und einen Kühlflüssigkeitskreislauf, der nacheinander die zwei Kühlkammern (41, 42) passiert, **dadurch gekennzeichnet, dass** die zwei Kammern (41, 42) aneinander angefügt und durch eine zentrale Trennwand (36) voneinander getrennt sind, umfassend eine Öffnung (37), die die Flüssigkeitsverbindung zwischen den zwei Kammern (41, 42) ermöglicht, und **dass** der Kühlflüssigkeitskreislauf im Inneren des Wärmetauschers (10) zwei parallele Zirkulationszweige (38, 39) vorweist und einem U-förmigen Weg im Inneren des Wärmetauschers von einem Einlass (30) zu einem Auslass (35) folgt, die in verschiedenen Kammern (41, 42) angeordnet sind.

2. Kühlsystem (100) nach Anspruch 2, **dadurch gekennzeichnet, dass** der Kühlmittelkreislauf einen Einlass (30) und einen Auslass (35) in dem Tauscher umfasst, die in verschiedenen Kammern (41, 42) angeordnet sind.

3. Kühlsystem (100) nach Anspruch 1 oder 2,
**dadurch gekennzeichnet, dass** der Flüssigkeitseinlass (30) in die Druckluftkühlkammer (41) mündet.

4. Kühlsystem (100) nach einem der Ansprüche 1 bis 3,
**dadurch gekennzeichnet, dass** die Flüssigkeitszirkulationsachse orthogonal zu der Druckluftzirkulationsachse verläuft.

5. Kühlsystem (100) nach einem der Ansprüche 1 bis 4,
**dadurch gekennzeichnet, dass** die Flüssigkeitszirkulationsachse parallel zu der Rezirkulationsgaszirkulationsachse verläuft.

6. Kühlsystem (100) nach einem der Ansprüche 1 bis 5,
**dadurch gekennzeichnet, dass** die Öffnung (37) im Wesentlichen diametral gegenüber dem Fluideinlass (30) in dem Tauscher eingerichtet ist.

7. Kühlsystem (100) nach einem der Ansprüche 1 bis 6,
**dadurch gekennzeichnet, dass** die Öffnung (37), die in die Trennwand (36) gebohrt ist, zum Ermöglichen einer maximalen Länge der Wärmetauschzone im Wesentlichen diametral gegenüber dem Kühlflüssigkeitsauslass (35) eingerichtet ist.

8. Kühlsystem (100) nach einem der Ansprüche 1 bis 7,
**dadurch gekennzeichnet, dass** die Rezirkulationsgase und die Druckluft den Tauscher über Rohrleitungen (43, 44) mit länglichem Querschnitt passieren.

9. Verbrennungsmotor, umfassend einen Ansaugluftkreislauf und einen Rezirkulationsgaskreislauf, die durch ein Kühlsystem nach einem der Ansprüche 1 bis 8 verlaufen.

10. Kraftfahrzeug, umfassend einen Verbrennungsmotor nach Anspruch 9.

## Claims

1. Cooling system (100) for gas and air, comprising a double-flow heat exchanger (10) through which the gases flow along a first axis and the compressed air flows along a second axis, and comprising a cooling chamber for the gases (42) adjoining each other and communicating with a cooling chamber for the compressed air (41) in which the axis of the gas flow (Xg) is substantially orthogonal to the axis of the compressed air flow (Xa) and a coolant circuit which passes consecutively through the two cooling chambers (41, 42),
**characterized in that** the two chambers (41, 42) are adjoined and separated from each other by a median separating wall (36) comprising an opening (37) allowing liquid communication between the two chambers (41,42) **and in that** the coolant circuit inside the exchanger (10) has two parallel circulation branches (38,39) and follows a U-shaped path inside the exchanger from an inlet (30) to an outlet (35) arranged in different chambers (41,42).

2. Cooling system (100) according to claim 2, **characterized in that** the coolant circuit comprises an inlet (30) and an outlet (35) in the exchanger, arranged in different chambers (41,42).

3. Cooling system (100) according to either claim 1 or claim 2,
**characterized in that** the liquid inlet (30) opens into the compressed air cooling chamber (41).

4. Cooling system (100) according to any of claims 1 to 3,
**characterized in that** the liquid circulation axis is orthogonal to the compressed air circulation axis.

5. Cooling system (100) according to any of claims 1 to 4,
**characterized in that** the liquid circulation axis is parallel to the recirculated gas circulation axis.

6. Cooling system (100) according to any of claims 1 to 5,
**characterized in that** the opening (37) is arranged substantially diametrically opposite the fluid inlet (30) in the exchanger.

7. Cooling system (100) according to any of claims 1 to 6,
**characterized in that** the opening (37) pierced in the separating wall (36) is arranged so as to be substantially diametrically opposite the coolant outlet (35) to allow maximum length of the heat exchange zone.

8. Cooling system (100) according to any of claims 1 to 7,
**characterized in that** the recirculated gases and compressed air pass through the exchanger via tubular ducts (43,44) of oblong cross-section.

9. Heat engine comprising an air intake circuit and a recirculated gas circuit which pass through a cooling system according to any of claims 1 to 8.

10. Motor vehicle comprising a heat engine according to claim 9.
